# FASCICULE DE BREVET EUROPEEN

(11) **EP 0 608 163 B1**
(45) Date de publication et mention de la délivrance du brevet: **22.07.1998**
(21) Numéro de dépôt: 94400079.3
(22) Date de dépôt: 12.01.1994
(51) Int. Cl.: H04B 7/185

(54) **Procédé et dispositifs de transmission d'informations, notamment par satellite**
Verfahren und Gerät zur Datenübertragung, insbesondere für Satellit
Method and device for data transmission, especially for satellite

(30) Priorité: 20.01.1993 FR 9300540
(43) Date de publication de la demande: 27.07.1994
(73) Titulaire: DASSAULT ELECTRONIQUE, F-92214 Saint-Cloud (FR)
(72) Inventeur: Potier, Thierry, F-78310 Maurepas (FR)
(74) Mandataire: Plaçais, Jean-Yves

(56) Documents cités:
- WO-A-84/01679
- DE-A- 3 232 599
- DE-A- 3 522 132
- ELECTRONICS AND WIRELESS WORLD vol. 95, no. 1636 , Février 1989 , SUTTON,GB; pages 137 - 142 XP45290 P.G.MATTOS 'Global positionning by satellite'
- PROCEEDINGS OF THE IEEE vol. 78, no. 7 , Juillet 1990 , NEW-YORK,US; pages 1087 - 1095 XP160452 A.HAMID RANA ET AL 'VSAT Technology, Trends, and Applications'
- 5EME INTERNATIONAL CONFERENCE ON DIGITAL SATELLITE COMMUNICATIONS Mars 1981 , GENOA,IT; pages 469 - 476 MORENO ET AL; 'Implementation imperfections of a 4phase-DCPSK on-board demodulator: performance degradations and measurement techniques'

## Description

L'invention concerne les techniques de transmission, dans un but de communication, éventuellement de localisation.

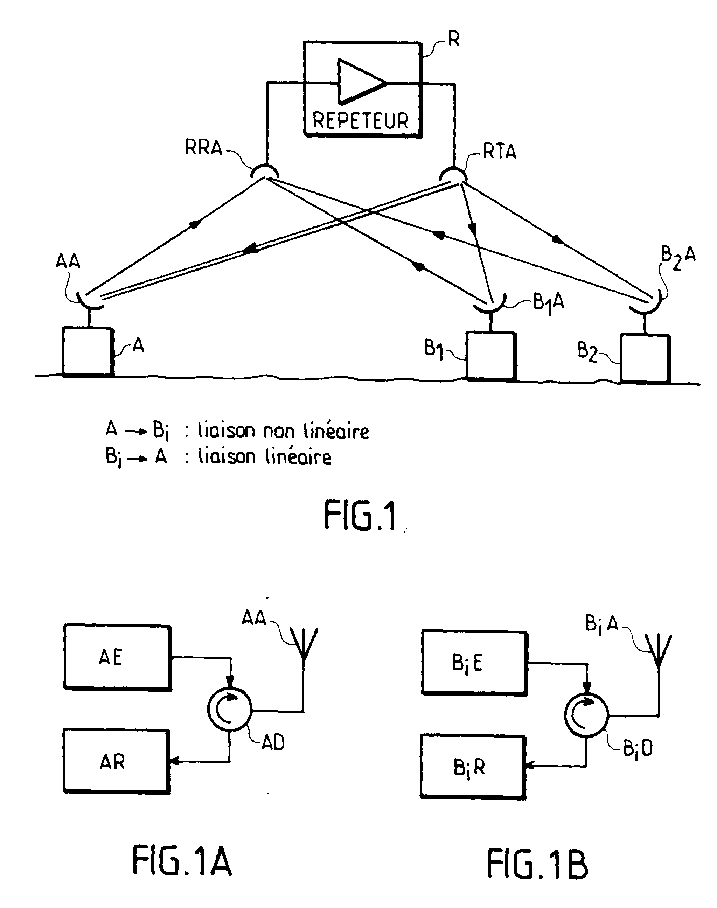

On sait relayer par satellite une liaison bidirectionnelle (figure 1) entre différentes stations (A, B1, B2) de la surface terrestre ou sol. La liaison de la station principale A vers les stations secondaires Bi peut être une liaison à bande étroite, et de forte puissance. En sens inverse, des stations secondaires Bi vers la station maîtresse A, il est préférable d'utiliser une liaison à large bande: sous réserve d'un codage approprié, une liaison à large bande permet une communication simultanée des stations secondaires Bi vers la station principale A.

A bord du satellite est installé un répéteur qui doit assurer la transmission convenable des signaux dans les deux bandes. Classiquement, ce répéteur assure l'amplification séparément pour chacune des bandes concernées.

Quoique susceptible de fonctionner, cette solution n'est pas entièrement satisfaisante, pour différentes raisons. L'une de ces raisons réside en ce que la puissance d'alimentation électrique disponible à bord d'un satellite est nécessairement limitée. Or, si la liaison à bande étroite peut faire l'objet d'une amplification à haut rendement (donc non linéaire), en revanche il ne peut manifestement pas en être de même pour la liaison à large bande. Un compromis est donc à trouver entre le gain d'amplification et la puissance électrique disponible.

En second lieu, le fait d'amplifier séparément à bord du satellite les signaux des deux liaisons respectivement à bande étroite et à large bande entraîne un doublement de certaines fonctions; ceci n'est pas souhaitable, car, plus la structure du satellite est complexe, plus délicates sont sa mise au point et sa maintenance.

La présente invention vient résoudre ces problèmes.

L'invention, qui peut être définie sous forme de procédé ainsi que de dispositifs, part de l'observation qu'il est possible de réaliser un multiplexage qui conserve l'essentiel des informations à transmettre, tout en permettant une simplification de la structure du répéteur.

Le procédé proposé est du type dans lequel un organe relais ou répéteur reçoit des signaux de haute fréquence modulés situés dans deux bandes de fréquences différentes, pour les retransmettre à la station principale et au moins une station secondaire.

Selon l'invention, le répéteur retransmet un signal multiplexé résultant d'une modulation en phase. Les signaux "modulants" sont tirés de ceux qui portent la modulation à large bande. Ce qui est modulé est le signal à bande étroite reçu (pseudo-porteuse). Les stations utilisatrices reçoivent ce signal multiplexé. Elles en extraient par filtrage la pseudo-porteuse modulée en bande étroite. Enfin, notamment dans le cas de la station principale A, celle-ci est utilisée pour démoduler en phase le signal multiplexé afin de recouvrer les signaux qui portent la modulation en large bande.

Ceci convient bien (mais non exclusivement) au cas où l'organe relais est un satellite terrestre, les liaisons s'effectuant par voie hertzienne. Comme déjà indiqué, la bande étroite véhicule des signaux de forte puissance entre une station principale au sol et au moins une station secondaire au sol, tandis que la bande large véhicule des signaux de puissance plus faible entre la ou les stations secondaires et ladite station principale.

Un répéteur classique de satellite comprend:
- des moyens amplificateurs de réception haute fréquence, associés à une première antenne, pour recevoir des signaux de haute fréquence modulés, situés d'une part dans une bande étroite de fréquence, d'autre part dans une bande large de fréquence,
- des moyens de traitement des signaux reçus, et
- des moyens amplificateurs d'émission associés à une seconde antenne pour réémettre des signaux traités conservant les informations desdites modulations.

Selon l'invention, les moyens de traitement de ce répéteur comprennent des moyens de filtrage pour séparer les signaux de bande étroite et des signaux de large bande, des moyens pour effectuer un changement de fréquence choisi sur les signaux de large bande, et un modulateur en phase des signaux de bande étroite par les signaux de large bande après leur changement de fréquence; les moyens amplificateurs d'émission se voient alors appliquer les signaux multiplexés issus de la modulation de phase.

Selon un aspect intéressant de l'invention, les moyens amplificateurs d'émission peuvent alors comprendre un amplificateur haute fréquence de puissance non linéaire et à haut rendement, qui traite globalement le signal multiplexé, sans altérer sensiblement les caractéristiques de la transmission.

De préférence, le changement de fréquence choisi, évoqué plus haut, est ajusté pour préserver un intervalle fréquentiel de garde entre la pseudo-porteuse et sa modulation de phase.

L'invention propose aussi un récepteur susceptible de coopérer avec un tel répéteur, et du type comprenant des moyens de réception haute fréquence associés à une antenne pour recevoir les signaux traités, conservant les informations des modulations initiales, des moyens de traitement pour recouvrer les informations relatives à la modulation dans l'une au moins des deux bandes (selon que le récepteur est installé sur la station principale ou sur les stations secondaires).

Selon l'invention, les moyens de traitement d'un tel récepteur comprennent un filtre pour extraire la pseudo-porteuse du signal multiplexé reçu, et un démodulateur, par cette pseudo-porteuse, du signal multiplexé reçu, ce qui fournit des signaux portant les informations contenues dans la modulation des signaux à large bande. Pour sa part, la modulation des signaux à bande étroite peut être recouvrée sur la pseudo-porteuse.

D'autres caractéristiques et avantages de l'invention apparaîtront à l'examen de la description détaillée ci-après et des dessins annexés, sur lesquels :
- la figure 1 est un schéma montrant la communication entre différentes stations au sol et un répéteur sur satellite;
- les figures 1A et 1B montrent la séparation connue entre les fonctions d'émission et de réception des stations au sol;
- la figure 2 est un schéma de principe (les fréquences étant indicatives) du traitement selon l'invention au niveau du répéteur, tandis que la figure 2A est un schéma détaillé d'un exemple de structure de répéteur;
- la figure 3 est un schéma de principe du traitement effectué à bord d'un récepteur au sol, tandis que la figure 3A est un schéma détaillé d'un tel récepteur; et
- les figures 4A à 4C sont des diagrammes fréquentiels utiles à la compréhension de l'invention.

Certaines caractéristiques de l'invention ne peuvent être représentées que par les dessins. En conséquence, les dessins annexés, qui sont pour l'essentiel de caractère certain, sont à considérer comme incorporés à la présente description. Ils pourront donc non seulement servir à mieux faire comprendre celle-ci, mais aussi contribuer à la définition de l'invention, le cas échéant.

Sur la figure 1, un répéteur R est installé à bord d'un satellite. Il possède une antenne de réception RRA, et une antenne d'émission RTA, toutes deux convenablement orientées pour éclairer une zone déterminée de la surface terrestre (ou sol).

Au sol, une station maîtresse A possède une antenne AA. De façon connue, l'antenne AA est partagée, à l'aide d'un duplexeur ou circulateur AD, entre des fonctions d'émission AE et des fonctions de réception AR.

Des stations secondaires B1 et B2 (génériquement Bi) possèdent aussi une antenne, avec la même structure générale que pour la station maîtresse, comme illustré sur la figure 1B.

La station A émet un signal de forte puissance et à bande étroite en direction de l'antenne RRA. Ce signal est transmis à travers le répéteur R jusqu'à l'antenne RTA, qui restitue le signal en question (éventuellement avec décalage de fréquence) aux stations secondaires Bi. En sens inverse, les stations Bi, qui peuvent émettre simultanément, adressent des signaux à large bande à l'antenne RRA; le répéteur retransmet ces signaux à l'antenne RTA, qui les adresse à l'antenne AA de la station principale A.

Jusqu'à présent, les solutions considérées pour la réalisation du répéteur R consistent simplement en une amplification sur deux voies parallèles, respectivement pour la bande étroite et la bande large.

Il en résulte les problèmes déjà indiqués.

En particulier, la liaison à bande étroite peut faire l'objet d'une amplification non linéaire, donc à haut rendement. Par contre, à cause de la présence de plusieurs signaux simultanés, l'autre liaison doit nécessairement faire l'objet d'une amplification linéaire, dont le rendement est bien moindre; l'amplification de la voie à large bande exerce donc une ponction substantielle sur l'alimentation électrique disponible à bord du satellite, ce qui crée un problème sur lequel il est inutile de s'étendre.

Enfin, à cause de la place limitée disponible à bord des satellites, il est délicat d'éviter une intermodulation des deux émissions du répéteur, d'autant plus qu'une seule antenne réémet pour les bandes de fréquences étroites et larges concernées, qui sont souvent relativement proches l'une de l'autre.

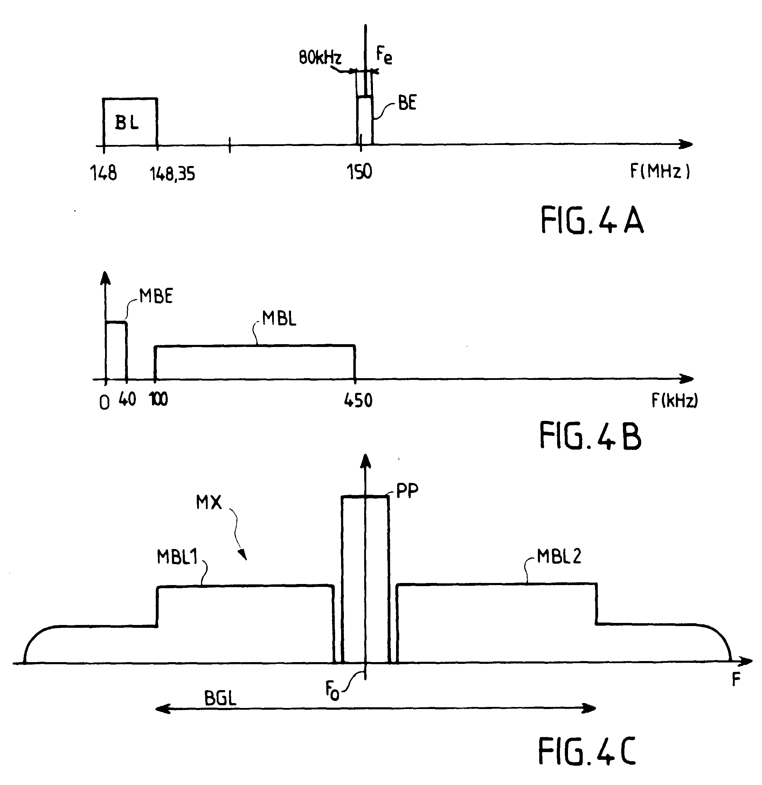

Dans une application particulière (figure 4A), la bande large BL s'étend entre environ 148 et 148,35 MHz, tandis que la bande étroite BE s'étend entre 149,96 et 150,04 MHz. On note Fe la fréquence centrale de la bande étroite, dont on rappelle qu'elle est modulée par les informations provenant de la station A. Cette modulation à bande étroite peut être du type dit "BFSK" (Binary Frequency Shift Keying), pour "codage par décalage de fréquence".

Les informations allant des stations Bi vers la station A sont transmises avec étalement de spectre, ce qui peut s'obtenir de différentes manières. L'une de celles-ci consiste à accroître le débit d'information à l'aide d'un code pseudo-aléatoire particulier, et à réaliser une modulation de phase sur une fréquence porteuse appropriée. Ceci est habituellement nommé "CDMA" (Code Division Multiple Access), pour "accès multiple à répartition par codage". Est également envisageable la technique dite "FDMA" (Frequency Division Multiple Access), pour "accès multiple à répartition fréquentielle".

En tout cas, selon les réalisations connues, le répéteur de la figure 1 comporte deux voies séparées pour amplifier et renvoyer d'une part le signal appartenant à la bande de fréquence étroite, d'autre part les signaux appartenant à la bande large.

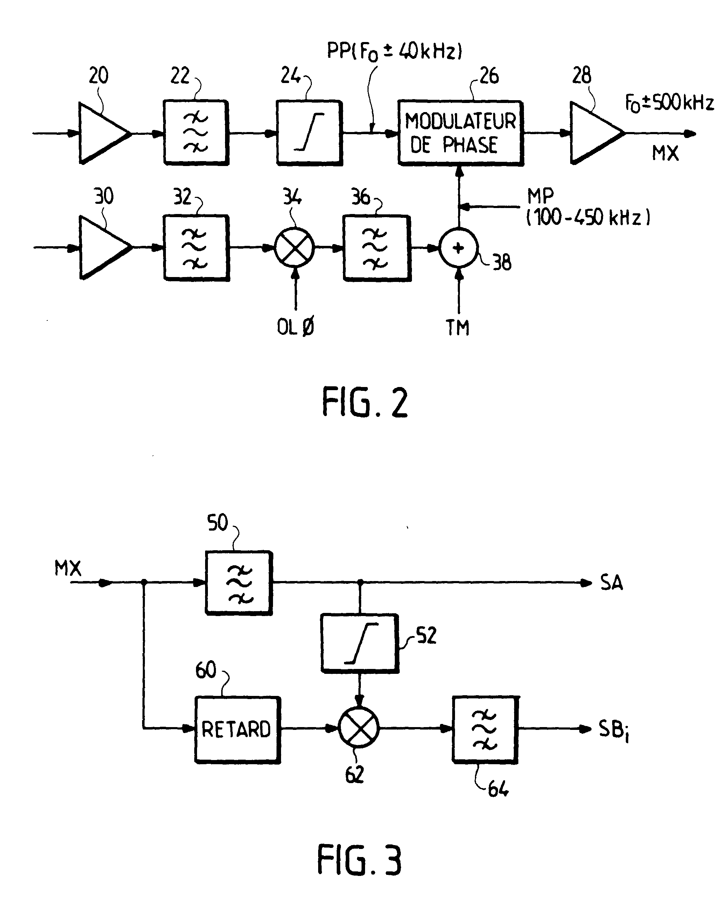

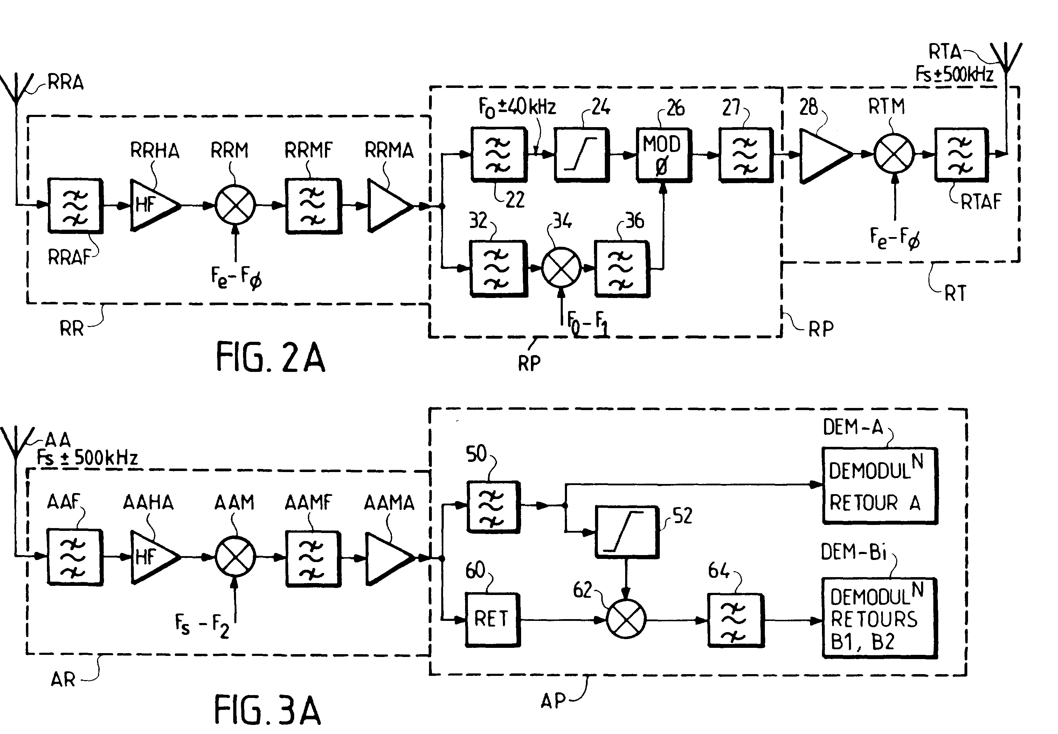

Il sera maintenant procédé à la description du répéteur selon l'invention, en référence à la figure 2 pour les principes de l'invention, et à la figure 2A pour un exemple de réalisation détaillé.

L'antenne RRA est reliée à un amplificateur de réception haute fréquence RR, qui peut être de type connu. Après un filtre d'antenne RRAF, et un amplificateur RRHA dans la bande de réception, il est prévu un mélangeur RRM avec un signal local de fréquence Fe-F0. Un filtre RRMF sélectionne le battement inférieur, et l'applique à un amplificateur moyenne fréquence RRMA.

La bande étroite et la bande large sont respectivement séparées ensuite par les filtres 22 et 32, qui marquent le début des circuits de traitement RP du répéteur selon l'invention. Ils peuvent être précédés d'amplificateurs respectifs 20 et 30 (figure 2).

La sortie du filtre 22 est par exemple égale à la fréquence F0 +/- 40 kHz (la fréquence centrale Fe de la bande étroite BE de la figure 4A devient F0 après le changement de fréquence effectué en RRM). Après ce filtre 22 est prévu un dispositif d'ajustement de niveau 24 qui peut être un étage à commande automatique de gain, ou plus simplement un limiteur.

En partie basse, la sortie du filtre 32 est appliquée à un mélangeur 34 qui reçoit une fréquence F0-F1, et est suivie d'un filtre du battement inférieur 36.

La sortie du limiteur 24 constitue la première entrée (signal à moduler) d'un modulateur de phase 26. La sortie du filtre 36 est appliquée comme signal modulant au modulateur de phase 26. Celui-ci est suivi d'un filtre 27.

En pratique, c'est au niveau de l'un et/ou l'autre des filtres 32 et 36 que vont s'exercer les fonctions de filtrage des signaux indésirables et de commande automatique de gain qu'il est parfois nécessaire d'incorporer dans un tel répéteur. En outre, les signaux de télémesure TM peuvent être ajoutés au niveau d'un additionneur 38 placé après le filtre 36 (figure 2).

La fréquence F1 utilisée pour le mélangeur 34 est déterminée de sorte que la bande de fréquence en sortie du filtre 36 (éventuellement de l'additionneur 38) s'étende par exemple de 100 à 450 kHz, pour exciter convenablement le modulateur de phase 26.

Comme l'illustre la figure 4B, les changements de fréquence RRM et 34 ont pour effet de ramener la bande large MBL assez près de la fréquence zéro. Dans le seul but explicatif, on a également fait figurer sur la figure 4B la largeur de bande de la modulation MBE (rapportée à la fréquence Fe au niveau des ondes électromagnétiques, et à F0 à l'entrée du modulateur de phase 26).

L'allure spectrale de la sortie du modulateur de phase 26 est illustrée sur la figure 4C. Autour de la fréquence F0, la modulation MBE de la figure 4B crée une pseudo-porteuse PP, dont le régime de modulation est celui qui a été choisi pour l'émission de la station A, en bande étroite.

Il est important de noter que ce n'est pas la fréquence F0 mais l'ensemble de la pseudo-porteuse, c'est-à-dire cette fréquence F0 et sa modulation de type MBE qui est à son tour modulée en phase par la modulation MBL de la figure 4B.

Il en résulte deux bandes latérales MBL1 et MBL2, dont l'allure générale est donnée sur la figure 4C.

Globalement, la partie principale du spectre d'émission peut être confinée sur une bande globale BGL d'environ 1 MHz.

Il existe de part et d'autre des résidus de modulation, à un niveau beaucoup moins élevé.

A titre d'exemple, on prend le cas où les bandes de fréquence sont celles indiquées plus haut.

Il s'est avéré possible de conserver un rapport de puissance satisfaisant entre les signaux de la bande étroite et ceux de la bande large, en choisissant un indice de modulation pour la modulation de phase 26 d'environ 0,4 radian efficace (RMS).

A partir de là, et malgré l'existence d'une large bande à transmettre, il devient possible d'utiliser la sortie du modulateur de phase 26 pour alimenter (figure 2) un amplificateur 28 de type non linéaire à rendement très élevé, par exemple un amplificateur opérant en classe E, qui délivre une puissance de l'ordre de 40 watts.

Dans un mode de réalisation détaillé (figure 2A), l'amplificateur 28 fait partie de moyens amplificateurs d'émission RT du répéteur, qui comprennent un mélangeur de transposition inverse RTM à partir du signal local FS-F0, puis un filtre 27 de mélange, qui alimente l'amplificateur 28, et enfin le filtre RTAF qui alimente l'antenne RTA.

Très avantageusement, la limite inférieure de la bande MBL sur la figure 4B est placée pour qu'il subsiste un intervalle de fréquence de taille adéquate entre celle-ci et ce qui relève de la pseudo-porteuse PP.

Bien que cet intervalle de garde soit à définir selon les applications, la Demanderesse estime actuellement que, dans les conditions de détail ici prévues, l'intervalle de fréquence doit être de 60 kHz.

Il est maintenant fait référence à la figure 3 pour le schéma de principe d'une station au sol, et à la figure 3A pour son schéma détaillé.

On considère tout d'abord qu'il s'agit de la station principale A.

L'antenne AA est reliée à un récepteur haute fréquence AR, qui comporte un filtre d'antenne AAF, un amplificateur haute fréquence AAHA, un mélangeur AAM par un signal local FS-F2, un filtre du battement inférieur AAMF (F2 +/- 500kHz), et un amplificateur moyenne fréquence AAMA.

La sortie de l'amplificateur AAMA est reliée à des moyens de traitement AP, où une première voie est définie par un filtre 50 qui isole la pseudo-porteuse PP, tandis qu'une deuxième voie commence par un circuit de retard 60, capable d'appliquer aux signaux un retard pur sensiblement égal au temps de transit des signaux dans le filtre 50.

La sortie du filtre 50 fournit la pseudo-porteuse qui peut être appliquée à des circuits de démodulation DEM_A utilisés classiquement pour démoduler le signal dont il s'agit, compte tenu de sa porteuse.

La sortie du filtre 50 est appliquée également à un circuit d'ajustement de niveaux 52, constitué de préférence d'un étage limiteur.

Un comparateur de phase 62 reçoit d'une part la sortie du circuit de retard 60, de l'autre celle du limiteur 52. Après traversée du filtre 64, on obtient la bande large, dont l'occupation spectrale est représentée à la figure 4B. Cette bande large est elle aussi applicable à des circuits de démodulation DEM_Bi, chargés d'y recouvrer les retours provenant des stations telles que B1 et B2 (figure 1).

On reviendra maintenant sur le principe des liaisons bidirectionnelles auxquelles la présente invention peut s'appliquer.

Etant la station principale ou maîtresse, la station A a vocation d'une part à émettre ses propres signaux (ainsi que des télécommandes pour le répéteur du satellite), d'autre part non seulement à recevoir les réponses des stations Bi, ce qui se fera jusqu'au stade de l'étage DEM_Bi, mais aussi à écouter ses propres signaux, tels qu'ils sont retransmis par le répéteur, ce qui se fera au niveau de l'étage DEM_A.

Pour les stations Bi, il n'est pas nécessaire qu'elles écoutent leurs propres signaux, ou ceux des stations soeurs. En conséquence, il est possible, pour certaines applications du moins, de réaliser les étages de réception des stations Bi en omettant les organes 52, 60, 62, 64 et DEM_Bi de la figure 3A.

Par ailleurs, l'homme du métier comprendra que cette figure 3A ne décrit que la partie réception AR ou BiR des figures 1A et 1B. Les parties émission AE et Bi1E restent de type classique.

La présente invention permet donc la réalisation d'une liaison de communication bidirectionnelle totalement contrôlée par la station A, et avec l'aide du répéteur sur satellite R. Cette liaison de communication peut fonctionner à la manière d'un réseau.

En permettant notamment l'utilisation d'un amplificateur non linéaire à très haut rendement, l'invention permet une amélioration considérable au niveau de la construction du satellite, et de la conception de son alimentation, par exemple par panneaux solaires.

En outre, il a été observé que la modulation de phase telle que décrite conserve de façon tout à fait satisfaisante la linéarité requise dans la large bande.

Et, comme déjà indiqué, le répéteur satellite est simple, ce qui est avantageux au niveau de sa conception et de sa maintenance. Sont également pratiquement écartés les problèmes qui se posaient à cause de l'intermodulation des deux émetteurs sur les deux voies à répéter, avec les moyens de la technique antérieure.

La présente invention peut s'appliquer de façon plus générale que pour les messageries bidirectionnelles qui viennent d'être définies.

En particulier, comme le sait l'homme du métier, elle peut également servir à une localisation, par usage de l'effet Doppler lié au mouvement du satellite, dès lors que celui-ci est plus rapide que le mouvement des stations au sol.

Pour la mise en oeuvre de l'invention, il peut être avantageux que les antennes RRA et RTA du satellite possèdent des diagrammes de rayonnement assez ouverts. Il est également important que ces antennes soient optimisées par ce que l'on appelle l'usage de lobes "formés" sur les côtés. Cela consiste à ajuster les parties latérales des lobes d'antennes pour compenser le fait qu'un rayonnement reçu latéralement sur l'antenne vient en principe d'une station un peu plus distante que ce que l'on reçoit dans l'axe de l'antenne.

Dans ce qui précède, on a défini la modulation selon l'invention comme une modulation de phase. Bien entendu, elle peut également être considérée comme une modulation de fréquence ou plus généralement comme une modulation angulaire, comme le sait l'homme du métier.

De leur côté, les bandes étroites et larges peuvent être deux parties voisines ou non du spectre VHF, UHF ou autre.

## Revendications

1. Procédé de transmission d'informations, dans lequel un organe-relais (R) reçoit des signaux de haute fréquence modulés, situés dans deux bandes de fréquences différentes, pour les retransmettre aux stations utilisatrices (A, B1, B2) caractérisé en ce que, l'une des modulations étant à, bande étroite et l'autre en large bande, l'organe-relais (R) retransmet un signal multiplexé (MX) résultant de la modulation en phase, par des signaux (MP) tirés de ceux qui portent la modulation en large bande, d'une pseudo-porteuse (PP), constituée du signal modulé par ladite modulation en bande étroite, et en ce que les stations utilisatrices reçoivent ce signal multiplexé, et en extraient par filtrage (50) la pseudo-porteuse modulée en bande étroite.

2. Procédé selon la revendication 1, caractérisé en ce que, dans l'une au moins des stations, la pseudo-porteuse est exploitée pour démoduler en phase (62) le signal multiplexé afin de recouvrer des signaux qui portent la modulation en large bande.

3. Procédé selon l'une des revendications 1 et 2, caractérisé en ce que l'organe-relais (R) est un satellite terrestre.

4. Procédé selon l'une des revendications 1 à 3, caractérisé en ce que la bande étroite véhicule des signaux de forte puissance entre une station principale au sol (A) et au moins une station secondaire au sol (B1, B2), tandis que la bande large véhicule des signaux de puissance plus faible entre la ou les stations secondaires (B1, B2) et ladite station principale (A).

5. Procédé selon l'une des revendications précédentes, caractérisé en ce que la pseudo-porteuse (PP) est tirée des signaux modulés en bande étroite, le cas échéant, avec changement de fréquence.

6. Procédé selon l'une des revendications précédentes, caractérisé en ce que la bande étroite et la large bande sont deux parties voisines du spectre VHF ou UHF.

7. Répéteur électromagnétique, comprenant :
- des moyens amplificateurs de réception haute fréquence (RR), associés à une première antenne (RRA), pour recevoir des signaux de haute fréquence modulés, situés d'une part dans une bande étroite de fréquence, d'autre part dans une bande large de fréquences,
- des moyens de traitement des signaux reçus (RP), et
- des moyens amplificateurs d'émission (RT) associés à une seconde antenne (RTA), pour réémettre des signaux traités, conservant les informations desdites modulations,
caractérisé en ce que les moyens de traitement comprennent des moyens de filtrage (32, 22) pour séparer les signaux de bande étroite et les signaux de large bande, des moyens (34) pour effectuer un changement de fréquence choisi sur les signaux de large bande, et un modulateur en phase (26) des signaux de bande étroite par les signaux de large bande après leur changement de fréquence, tandis que les moyens amplificateurs d'émission (RT) se voient appliquer les signaux multiplexés issu de la modulation de phase.

8. Dispositif selon la revendication 7, caractérisé en ce que les moyens amplificateurs d'émission (RT) comprennent un amplificateur haute fréquence de puissance non linéaire et à haut rendement (28).

9. Dispositif selon l'une des revendications 7 et 8, caractérisé en ce que le modulateur comprend un étage (24) d'ajustement du niveau des signaux de bande étroite.

10. Dispositif selon l'une des revendications 7 à 9, caractérisé en ce que ledit changement de fréquence choisi, effectué sur les signaux de large bande, est ajusté pour préserver un intervalle fréquentiel de garde entre la pseudo-porteuse et sa modulation de phase.

11. Récepteur susceptible de coopérer avec le répéteur de l'une des revendications 7 à 10, comprenant des moyens de réception haute fréquence (AR) associés à une antenne (AA), pour recevoir lesdits signaux traités, conservant les informations des modulations initiales, et des moyens de traitement (AP) pour recouvrer les informations relatives à la modulation dans l'une au moins des deux bandes,
caractérisé en ce que les moyens de traitement (AP) comprennent un filtre (50) pour extraire la pseudo-porteuse du signal multiplexé reçu, et un démodulateur (62), par cette pseudo-porteuse, du signal multiplexé reçu, ce qui fournit des signaux portant les informations contenues dans la modulation des signaux à large bande.

12. Dispositif selon la revendication 11, caractérisé en ce que le démodulateur comprend un étage (52) d'ajustement de niveau des signaux à bande étroite, et un comparateur de phase (62).

## Patentansprüche

1. Verfahren zur Informationsübertragung, in dem eine Relaiseinrichtung (R) modulierte Hochfrequenzsignale empfängt, die in zwei verschiedenen Frequenzbändern liegen, um sie an die Benutzerstationen (A, B1, B2) erneut zu übertragen,
dadurch gekennzeichnet, daß, da die eine der Modulationen eine Schmalbandmodulation und die andere eine Breitbandmodulation ist, die Relaiseinrichtung (R) ein Multiplexsignal (MX) erneut durch Signale (MP) überträgt, das aus der Phasenmodulation resultiert, wobei die Signale (MP) aus denjenigen, die die Breitbandmodulation tragen und einer Pseudoträgerfrequenz (PP), die aus dem durch die Schmalbandmodulation modulierten Signal gebildet ist gewonnen werden, und daß die Benutzerstationen dieses Multiplexsignal empfangen und aus ihm durch Filterung (50) die im schmalen Band modulierte Pseudoträgerfrequenz extrahieren.

2. Verfahren nach Anspruch 1,
dadurch gekennzeichnet, daß in mindestens einer der Stationen die Pseudoträgerfrequenz verarbeitet wird, um das Multiplexsignal phasengleich zu demodulieren (62), um Signale wiederzugewinnen, die die Breitbandmodulation tragen.

3. Verfahren nach Anspruch 1 oder 2,
dadurch gekennzeichnet, daß die Relaiseinrichtung (R) ein (terrestischer) Satellit ist.

4. Verfahren nach einem der Ansprüche 1 bis 3,
dadurch gekennzeichnet, daß das schmale Band Signale starker Leistung zwischen einer Hauptstation (A) am Boden und mindestens einer sekundären Station (B1, B2) am Boden überträgt, während das breite Band Signale niedrigerer Leistung zwischen der oder den sekundären Stationen (B1, B2) und der Hauptstation (A) überträgt.

5. Verfahren nach einem der vorhergehenden Ansprüche,
dadurch gekennzeichnet, daß die Pseudoträgerfrequenz (PP) aus den im schmalen Band modulierten Signalen, gegebenenfalls mit Frequenzwechsel entnommen wird.

6. Verfahren nach einem der vorhergehenden Ansprüche,
dadurch gekennzeichnet, daß das schmale Band und das breite Band zwei benachbarte Abschnitte des VHF oder UHF Spektrums sind.

7. Elektromagnetischer Verstärker, der folgendes aufweist:
- Verstärkermittel für den Hochfrequenzempfang (RR), die an eine ersten Antenne (RRA) angeschlossen sind, um modulierte Hochfrequenzsignale zu empfangen, die einerseits in einem Schmalfrequenzband und andererseits in einem Breitfrequenzband liegen,
- Mittel zur Verarbeitung der empfangenen Signale (RP) und
- Sendeverstärkermittel (RT), die an einer zweiten Antenne (RTA) angeschlossen sind, um verarbeitete Signale wiederauszustrahlen, wobei die Informationen der Modulationen bewahrt werden,
dadurch gekennzeichnet, daß die Verarbeitungsmittel folgendes umfassen:
Filtermittel (32, 22), um die Schmalbandsignale und die Breitbandsignale zu trennen,
- Mittel (34), um einen gewählten Frequenzwechsel an den Breitbandsignalen auszuführen, und
- einen Phasenmodulator (26) der die Schmalbandsignale mittels der Breitbandsignale nach ihrem Frequenzwechsel moduliert, während die Sendeverstärkermittel (RT) die von der Phasenmodulation abgeleiteten Multiplexsignale anwenden.

8. Vorrichtung nach Anspruch 7,
dadurch gekennzeichnet, daß die Sendeverstärkermittel (RT) einen Hochfrequenzverstärker (28) nichtlinearer Leistung und mit hohem Wirkungsgrad aufweisen.

9. Vorrichtung nach Anspruch 7 oder 8,
dadurch gekennzeichnet, daß der Modulator eine Stufe (24) zur Einstellung des Pegels der Schmalbandsignale aufweist.

10. Vorrichtung nach einem der Ansprüche 7 bis 9,
dadurch gekennzeichnet, daß der gewählte Frequenzwechsel, der an den Breitbandsignalen vorgenommen wird, eingestellt wird, um ein Schutzfrequenzintervall zwischen der Pseudoträgerfrequenz und ihrer Phasenmodulation zu bewahren.

11. Empfänger, der geeignet ist, mit dem Verstärker aus einem der Ansprüche 7 bis 10 zusammenzuwirken, der folgendes aufweist:
Hochfrequenzempfangsmittel (AR), die an eine Antenne (AA) angeschlossen sind, um die behandelten Signale zu empfangen, wobei die Informationen der Anfangsmodulationen bewahrt werden, und
- Verarbeitungsmittel (AP), um die Informationen bezüglich der Modulation in mindestens einem der beiden Bänder wiederzugewinnen,
dadurch gekennzeichnet, daß die Verarbeitungsmittel (AP) folgendes aufweisen:
- einen Filter (50), um die Pseudoträgerfrequenz aus dem empfangenen Multiplexsignal zu extrahieren, und einen Demodulator (62), durch diese Pseudoträgerfrequenz, von dem empfangenen Multiplexsignal, wodurch Signale bereitgestellt werden, die die Informationen tragen, die in der Modulation der Breitbandsignale enthalten sind.

12. Vorrichtung nach Anspruch 11,
dadurch gekennzeichnet, daß der Demodulator eine Stufe (52) zur Einstellung des Pegels der Schmalbandsignale und einen Phasenkomparator (62) aufweist.

## Claims

1. Process for transmitting data, in which a relay member (R) receives modulated high-frequency signals, located in two bands having different frequencies, in order to retransmit them to user stations (A, B1, B2), characterised in that, one of the modulations being narrowband and the other being broadband, the relay member (R) retransmits a multiplexed signal (MX) resulting from the phase modulation, by signals (MP) drawn from those carrying the broadband modulation, of a pseudo-carrier (PP) constituted by the signal modulated by the narrowband modulation, and in that the user stations receive the multiplexed signal and extract the narrowband-modulated pseudo-carrier therefrom by filtering (50).

2. Process according to claim 1, characterised in that, in at least one of the stations, the pseudo-carrier is exploited to phase demodulate (62) the multiplexed signal in order to recover signals carrying the broadband modulation.

3. Process according to either claim 1 or claim 2, characterised in that the relay member (R) is a terrestrial satellite.

4. Process according to any one of claims 1 to 3, characterised in that the narrowband carries high-power signals between a main ground station (A) and at least one secondary ground station (B1, B2), while the broadband carries signals of lower power between the secondary station(s) (B1, B2) and the main station (A).

5. Process according to any one of the preceding claims, characterised in that the pseudo-carrier (PP) is drawn from the narrowband-modulated signals, where appropriate, with a change in frequency.

6. Process according to any one of the preceding claims, characterised in that the narrowband and the broadband are two adjacent portions of the VHF or UHF spectrum.

7. Electromagnetic repeater, comprising:
- high-frequency receiving amplifier means (RR), associated with a first antenna (RRA), for receiving modulated high-frequency signals located on the one hand in a narrow frequency band and, on the other hand, in a broad frequency band,
- means for processing the received signals (RP), and
- transmitting amplifier means (RT) associated with a second antenna (RTA), for retransmitting processed signals, preserving the data of the modulations,
characterised in that the processing means comprise filtering means (32, 22) for separating the narrowband signals and the broadband signals, means (34) for bringing about a selected frequency change on the broadband signals, and a device (26) for modulating the phase of the narrowband signals by the broadband signals after their frequency change, while the multiplexed signals resulting from the phase modulation are applied to the transmitting amplifier means (RT).

8. Device according to claim 7, characterised in that the transmitting amplifier means (RT) comprise a high-output high-frequency non-linear power amplifier (28).

9. Device according to either claim 7 or claim 8, characterised in that the modulator comprises a stage (24) for adjusting the level of the narrowband signals.

10. Device according to any one of claims 7 to 9, characterised in that the selected frequency change carried out on the broadband signals is adjusted to preserve a safety frequency interval between the pseudo-carrier and its phase modulation.

11. Receiver capable of cooperating with the repeater of any one of claims 7 to 10, comprising high-frequency receiving means (AR) associated with an antenna (AA), for receiving the processed signals, preserving the data of the initial modulations, and processing means (AP) for recovering the data relating to the modulation in at least one of the two bands, characterised in that the processing means (AP) comprise a filter (50) for extracting the pseudo-carrier from the multiplexed signal received, and a demodulator (62), by that pseudo-carrier, of the multiplexed signal received, which provides signals carrying the data contained in the modulation of the broadband signals.

12. Device according to claim 11, characterised in that the demodulator comprises a stage (52) for adjusting the level of the narrowband signals, and a phase detector (62).
